(19) Europäisches Patentamt
European Patent Office
Office européen des brevets

(11) EP 1 898 541 A1

(12) EUROPEAN PATENT APPLICATION

(43) Date of publication:
12.03.2008 Bulletin 2008/11

(51) Int Cl.:
*H04J 11/00* (2006.01)

(21) Application number: 06018599.8

(22) Date of filing: 05.09.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: Nokia Siemens Networks GmbH & Co. KG
81541 München (DE)

(72) Inventors:
• Hrdlicka, Ondrej
851 04 Bratislava (SK)
• Svac, Pavol
08701 Giraltovce (SK)

(54) **Method and communications system based on synchronously orthogonal quadruplets of two-shift complementary code pairs**

(57) The present invention proposes a method and a communications system for transmitting signals in a communications system, wherein each of four code sets comprising exactly two two-shift complementary code pairs is assigned for communication between entities of the communications system. The inventive concept is characterised in that ideal aperiodic auto-correlation property and zero cross-correlation value associated with every fourth shift of aperiodic cross-correlation function allow to reach either increased capacity or unique resource allocation flexibility and/or data rate adjustments according to users' or system's requirements.

FIG 1

Example of resource allocation for multi-carrier CDMA system with SOQT-SCCP

**Description**

The present invention relates to a method and a communications system for transmitting/receiving signals in a communications system, wherein each of four code sets comprising exactly two two-shift complementary code pairs is assigned for communication between entities of communications system.

1 TECHNICAL BACKGROUND AND GENERAL DESCRIPTION OF INVENTION

1.1 Technical background

The techniques of multi-carrier modulation have been recently recognized as the most promising transmitting methods for beyond third generation (B3G) mobile communications systems. The concept of multi-carrier modulation seems to be the most suitable solution due to its ability to reach the requirements specified for B3G systems, such as higher flexibility, higher transmission rates, frequency usage efficiency, etc.
The most well-known low-complex technique that performs multi-carrier modulation by using digital processing is Orthogonal Frequency Division Multiplexing (OFDM). The benefits and success of the spread spectrum techniques for the 2nd- and 3rd-generation mobile systems, and OFDM for digital broadcasting and wireless LANs motivated many researchers to investigate the combination of both techniques, known as multi-carrier spread spectrum or multi-carrier code division multiple access (CDMA). Since 1993 when the first combination of OFDM and CDMA was introduced, several clones of multi-carrier CDMA concepts have been developed. The main differences between these proposals are mainly in spreading operations, frequency mappings and detection strategies.
The spreading codes play an essential role in all these concepts, as their characteristics govern not only the performance but even the feasibility of particular design. There are several aspects according to which the spreading codes can be classified. The most common and effective is criterion based on their correlation nature. It has been noted in many publications that good auto-correlation properties of a family of spreading codes come at the expense of cross-correlation properties and vice versa. Such a relationship holds for so-called unitary codes like OVSF codes, M-sequences, Gold sequences, etc. that work on a one-code-per-user basis. However, there exist classes of spreading codes which enable to achieve simultaneously ideal auto- and cross-correlation properties. Their common feature, which differentiates them from the unitary codes, is that resulting correlation properties are designated by the sum of partial auto- and cross-correlation functions of two or more codes or sequences bounded by the so-called complementary principle. The design of such classes and their applications have attracted an increasing attention in the last few years, since they can provide an improved performance over conventional CDMA based systems and showed ability to transform, under certain conditions, CDMA systems from interference-limited operational domain to noise-limited one.

Complementary pairs, also known as Golay pairs, Golay complementary pairs, Golay complementary sequences or $\delta$-codes, were firstly introduced by M.J.E. Golay in the paper from 1949 [1], as a part of his work on infrared multislit spectrometry. Golay presented there the basics of complementary coding without any theoretical development. His next paper [2] published in 1951 exposed the fundamental property of complementary sequences in the context of multislit spectrometry. These two papers formed a basis for the classic paper on complementary sequences [3], published by Golay in 1961. It contains definitions, some basic properties and recursive methods for synthesis of complementary sequences derived mainly by algebraic and combinatorial arguments.

Following Golay's work, Welti [4], Turyn [5], and Taki et. al. [6] investigated the closely related quaternary and even-shift sequences and their relations. Generalization of the complementary principle to polyphase sequences can be found for example in [7, 8].
Tseng and Liu [9] extended the idea of complementary sequences to sets containing more than two sequences. They introduced term complementary set for a set of $L$ sequences of length $L = 2^n$, $n \geq 1$ in which the sum of all auto-correlation functions is zero for all non-zero shifts. Orthogonal relation between complementary sets was also defined via correlation function. More precisely, two complementary sets are said to be mutually orthogonal if the sum of all cross-correlation functions between the corresponding sequences in these two sets is always zero. They proposed recursive synthesis that allows for constructing collection of at most $L$ mutually orthogonal complementary sets (MOCS). Later, Suehiro and Hatori [10] defined and generated Complete Complementary (CC) codes derived from $N$-shift cross-orthogonal sequences. The CC code of order $N$ consists of $N$ flocks each containing $N$ element codes with a code length of $L = N^2$, wherein $N = 2^n$, $n \geq 1$.
In despite of different nomenclature and parameters, a common feature of CC codes and MOCS is their ability to achieve ideal correlation functions, i.e. impulsive auto- and zero cross-correlation function. In the last few years, MOCS and CC codes found interesting applications in wireless digital communications, offering significant improvements compared to traditional code division multiple access (CDMA) based systems. For example, by the use of MOCS or CC codes inter symbol interference (ISI) and multiple access interference (MAI) in a multi-carrier direct sequence CDMA system can be eliminated [11]. Moreover, if the offset stacked spreading modulation scheme is employed [12], then high bandwidth efficiency and multirate signal transmission, which greatly simplifies the rate-matching algorithm relevant to wireless multimedia services can be achieved.

On the other hand, from the above analysis we see that the primary drawback of these classes is relatively small number of supported users, especially for CC codes. Another drawback inherent to their structure is the fixed number of sequences or elements drawn from complementary set or flock and lack of direct construction procedures.

Therefore, further research in this field was aimed at eliminating the drawbacks mentioned above. In 2002, Huang and Li [13] presented Scalable Complete Complementary Sets of Sequences (SCCSS), which enable to suppress inflexibility of MOCS and CC codes by decomposing a collection of complete complementary sets into constitutional subsets with decreased number of sequences, while keeping the length of sequences in all subsets unchanged. Since SCCSS are represented by mutually orthogonal Golay-paired Hadamard matrices, proposed synthesis is based on a closed-form formula instead of a recursion. The scalability of this class could enable a bandwidth and/or data rate adaptive multi-carrier direct sequence CDMA system, because the order of complete complementary sets can be easily adjusted according to the number of active users. However, the maximal capacity compared to MOCS remains the same. The inflexibility issue was further studied in [14], where Variable Two-Shift Complete Complementary (VT-SCC) codes derived from Variable Two-Shift Auto Complementary Code (VT-SACC) sets are disclosed. The proposed class of complete complementary codes is characterized by unique variability of cardinality while maintaining ideal aperiodic auto- and cross-correlation functions. The multi-carrier CDMA based communications systems employing VT-SCC codes are able to support a larger number of users than CC codes and show greater flexibility for resource allocation when compared to other codes based on the complementary principle. The VT-SCC codes are able to reach the same capacity like MOCS or SCCSS, however, at the expense of greater cardinality of VT-SACC sets.

All previous works on this subject were limited to designs reflecting original definitions of complementarity and orthogonality that ensure perfect auto- and cross-correlation properties. Such an approach predetermines the main parameters like the order and the cardinality, i.e. for given code length $L$ maximal order of $L$ can be achieved at the minimal cardinality of $L$. Additionally, from the relationship between the cardinality and the order stems that for given code length $L$, lowering the cardinality causes order degradation. Therefore, it is really difficult to design codes with perfect correlation properties possessing not only high capacity but also flexibility and freedom in relationship between the order and cardinality.

1.2 Summary of invention

The present invention aims to overcome the above mentioned problems.

Said problems are solved by the features mentioned in the independent claims. Preferred embodiments of the invention are described in the dependent claims.

The present invention proposes a method and a communications system for transmitting signals in a communications system, wherein each of four code sets comprising exactly two two-shift complementary code pairs is assigned for communication between entities of the communications system. The inventive concept is characterised in that ideal aperiodic auto-correlation property and zero cross-correlation value associated with every fourth shift of aperiodic cross-correlation function allow to reach either increased capacity or unique resource allocation flexibility and/or data rate adjustments according to users' or system's requirements.

An aspect of the invention is a method for transmitting signals in a communications system based on any spreading technique employing synchronously orthogonal quadruplets of two-shift complementary code, called SOQT-SCC, pairs characterized in that a maximum of four code sets each consisting of two two-shift complementary, called T-SC, code elements of length $L=2^n$, $n > 1$ can be used for spreading a maximum of four data symbol streams on the same resources. Preferably a maximum of four code sets each consisting of exactly two two-shift complementary code pairs are used. Preferably the method uses a single or multiple of SOQT-SCC pairs over any number of resources, with or without using time division multiple access schemes, frequency hopping (FH) patterns or any other resource allocation schemes that are found relevant in connection with SOQT-SCC. The T-SC code elements of length $L$ can have an aperiodic auto-correlation, called AAC, function which takes on zero values for every second shift, starting with the shift $\tau = 2$. Preferably, the SOQT-SCC pairs are characterized in that every second chip of one T-SC code element is negated compared to the respective chip of the other T-SC code element within the SOQT-SCC pair. According to an embodiment of the invention the sum of AAC functions of T-SC code elements within any SOQT-SCC pair is ideal delta function, with the peak magnitude of 2L and side-lobes level of zero, and sum of aperiodic cross-correlation functions of the respective T-SC code elements of any two SOQT-SCC pairs is zero for every fourth shift, including zero shift. The T-SC code element of length 2L can be generated by interleaving two T-SC code elements forming the SOQT-SCC pair of length $L$. Preferably, the interleaving can be characterized in that the one T-SC code element of the SOQT-SCC pair represents even and the other one represents odd coordinates of the T-SC code element to be generated. According to an embodiment of the invention, the code sets can be generated by simple reordering, reversing and negating of the code elements of another set. Preferably, each code set can be generated by componentwise multiplying of another code set with a vector of length $L$ specified in that its even coordinates are negated compared to odd coordinates. A further aspect of the invention is a communciations system transmitting/receiving signals for performing the above mentioned inventive method.

A new class of binary complete complementary codes Synchronously Orthogonal Quadruplets of Two-Shift Complementary Code Pairs (SOQT-SCCP) is proposed. The inventive concept relaxes dogma for perfect correlation properties, meaning that only ideal AAC nature is preserved. The ACC function is not ideally zero. Therefore, term synchronously orthogonal is used rather than orthogonal. The architecture of the proposed codes relies on T-SCC pairs resulting in ideal AAC and the lowest possible cardinality. Moreover, the composition complexity of the smallest building entity, i.e. T-SC code elements, is very low as it performs code element's reversing, reordering and negating. The fact that ACC is not ideal enables to generate a quadruplet of synchronously orthogonal code sets independent of the code length. If compared to traditional complementary codes, such as CC codes, MOCS, VT-SCC, etc. which at the same cardinality reach order of 2, SOQT-SCCP have twice as many sets.

The low cardinality of the code set offers the best possible granularity and high flexibility for the resource allocation and thus efficiently adjusts bandwidth and/or data rate according to system's or user's requirement. On the other hand, the lack of frequency diversity can be compensated by means of orthogonal frequency hopping technique. Basically, the proposed codes can be implemented in any application that has been designed for complementary codes or sets with modest modification reflecting their structure and properties. The performance of orthogonal multi-carrier CDMA with offset stacked spreading employing SOQT-SCCP in MAI-AWGN channel was evaluated and compared to that of CC codes for which this system was originally proposed. Simulation results have shown that in synchronous environments, such as downlink, SOQT-SCCP reach the same performance as CC codes and permit MAI-free transmission. From the discussion conducted at the end of the previous section follows that under certain circumstances SOQT-SCCP implementation can perform similarly even in a multipath Rayleigh channel at the increased capacity and resource allocation flexibility compared to conventional binary complete complementary codes or sets of sequences based on the complementary principle.

The proposed invention provides the following advantages:

- *Increased Capacity.* Proposed synthesis enables to generate a quadruplet of synchronously orthogonal code sets independent of the code length. If compared to the complementary codes known in the art, SOQT-SCCP have twice as many sets (see Table 1).

- *Ideal AAC.* The architecture of the proposed codes relies on two-shift complementary code (T-SCC) pairs with two-shift complementary (T-SC) code elements of length $L=2^n$, $n >1$. Therefore, it is possible to achieve ideal AAC function representing by an impulse of magnitude $2L$ and side-lobe levels of zero.

- *Low-complexity Synthesis.* The composition complexity of the smallest building entity of the proposed SOQT-SCCP, i.e. T-SC code elements, is very low as it only consists of three operations, namely code element's reversing, reordering and negating.

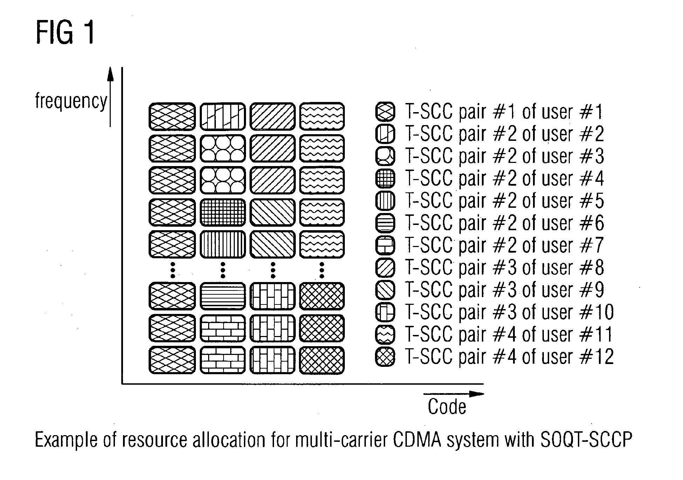

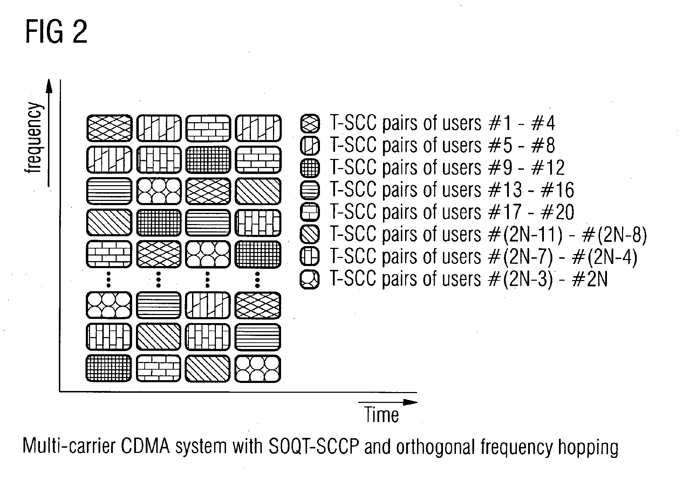

- *High Allocation Flexibility.* SOQT-SCCP offers very high flexibility and the best possible allocation granularity that can be particularly beneficial for multirate data transmission in multimedia services. Since T-SCC pairs consist of only two T-SC code elements, it is possible to allocate arbitrary even number of the resources with no impact on the order, like it is in other codes known in the art. The lack of frequency diversity of the proposed code can be easily compensated by allocating more resources (sub-carriers) to one user or service with repeating use of the assigned T-SCC pair in the frequency domain. Figure 1 shows exemplary resource allocation in multi-carrier CDMA system with SOQT-SCCP. If we use allocation pattern assigned to user #1 who allocates all available sub-carriers, then it is possible to transmit with the highest possible frequency diversity. However, in this case only four users can be in the system providing that no additional multiplexing, like e.g. TDMA, is considered.
  Another solution that can compensate for the lack of diversity and concurrently preserves high capacity relies on the so called frequency hopping (FH). By means of the orthogonal FH it is possible to change position of SOQT-SCCP assigned to one group of users in the frequency domain, and thus to increase frequency diversity. An illustrative example of such a solution is depicted in Figure 2. In order to ensure orthogonality, the whole quadruplet of T-SCC pairs assigned to group of four users has to be hopped.

- *4-shift ACC.* The proposed concept relaxes dogma for perfect correlation properties, meaning that only ideal aperiodic auto-correlation (AAC) nature is preserved. The aperiodic cross-correlation (ACC) function is not ideally zero but still manifesting useful structure guaranteeing that any shift being an integer multiple of 4 is zero. Therefore, we use term synchronously orthogonal rather than orthogonal.

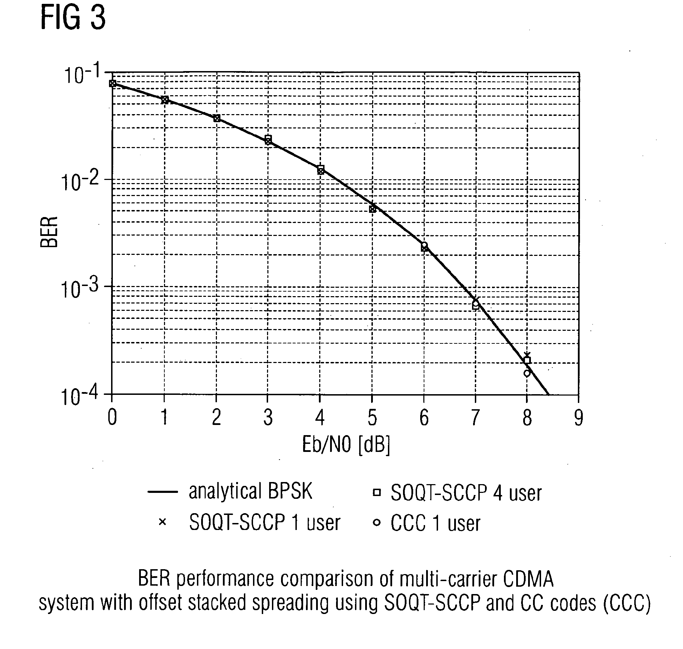

- Performance. The performance of orthogonal multi-carrier CDMA with offset stacked spreading employing SOQT-SCCP in MAI-AWGN channel was evaluated and compared to CC codes for which this system was originally proposed. Simulation results have shown that in synchronous environments, such as downlink, SOQT-SCCP reach the same performance as CC codes and permit MAI-free transmission (see Figure 3). Due to the non-ideal ACC function of SOQT-SCCP, all the promising and attractive features are achieved at the expense of the requirement for synchronous transmission, as orthogonality is guaranteed only for mutliple-of 4-shift of ACC function. However, in applications and environments where the inter-path and inter-user delays can be expected to follow specific offsets, then the isotropic MAI-free and MI-free communication can be provided even over the multipath channel. In this case, the data recovery is achieved with a simple correlator, without using any complex receiver implementations, such as MRC-RAKE, MUD, etc.

## 2 DETAILED DESCRIPTION OF INVENTION

### 2.1 Description of the drawings

Preferred embodiments of the present invention will now be described with reference to the accompanying drawing in which:

Figure 1 schematically shows an example of resource allocation for multi-carrier CDMA system with SOQT-SCCP,

Figure 2 schematically depicts a multi-carrier CDMA system with SOQT-SCCP and orthogonal frequency hopping,

Figure 3 is a schematic graph showing BER performance comparison of multi-carrier CDMA system with offset stacked spreading using SOQT-SCCP and CC codes (CCC).

### 2.2 Background and general notation

Let $B$ be the set $B = \{\pm 1\}$. It is denoted by $\overline{a}=\{a_i\}^L$ a vector of length $L = 2^n$, $n \geq 1$ with the coordinates $a_i \in B$ for $0 \leq i < L$ and by $\overline{a}=\{a_j\}^L$ the reversed replica of vector $\overline{a}$, i.e. $j = L - i - 1$. By $V$ a set of all possible vectors $\overline{a}$ of length $L$ is defined. Similarly, $M$ is used to denote a set of all $\pm 1$ matrices of size $m \times L$, i.e matrices with $m$ rows and $L$ columns, which only comprise elements 1 and -1. Further, the following operations for these sets are introduced :

- inner product of two vectors, i.e. $\odot : V \times V \to \mathbb{Z}$ such that if $\overline{a},\overline{b} \in V$ then $\overline{a} \odot \overline{b} = a_0 b_0 + a_1 b_1 + \cdots + a_{L-1} b_{L-1}$. Furthermore, if $\overline{a} \odot \overline{b} = 0$ then $\overline{a},\overline{b}$ are said to be orthogonal.

- componentwise product of two vectors, i.e. $\otimes : V \times V \to V$ such that if $\overline{a},\overline{b} \in V$ then $\overline{a} \otimes \overline{b} = (a_0 b_0, a_1 b_1,..., a_{L-1} b_{L-1})$ .

- componentwise product of a matrix and a vector, i.e. $\otimes : M \times V \to M$ such that if $X \in M$ and $\overline{e} \in V$ then $X \otimes \overline{e} = (x_{ij} e_j)$ for $i = 0,...,m - 1$ and $j = 0,..., L- 1$.

For notational convenience, +1 and -1 vector entries will be replaced by + and -. More specialized notation will be established in particular sections and when needed.
In communication theory the term correlation describes a degree to which the two signals (vectors) are similar. In other words, correlation can be defined as a measure of the dependence of one vector on another one (cross-correlation) or the dependence of one vector on itself (auto-correlation).
Define aperiodic correlation functions by means of polynomial multiplication. In this case any two vectors, say $\overline{a} = (a_0, a_1,..., a_{L-1})$ and $\overline{b} = (b_0, b_1,...,b_{L-1})$; $\overline{a}, \overline{b} \in V$, are associated with the polynomials $A(z) = \sum_{i=0}^{L-1} a_i z^i$ and $B(z) = \sum_{i=0}^{L-1} b_i z^i$, respectively. Then define aperiodic cross-correlation (ACC) function by the following polynomial multiplication in the Laurent polynomial ring $\mathbb{Z}[z, z^{-1}]$

$$A(z)B(z) = c_{-(L-1)}z^{-(L-1)} + c_{-(L-2)}z^{-(L-2)} + \cdots + c_0 + c_1 z + \cdots + c_{L-2}z^{L-2} + c_{L-1}z^{L-1},$$

$$(1)$$

where $c_k$ stands for the $k$-th aperiodic cross-correlation coefficient defined by

$$c_k = \begin{cases} \displaystyle\sum_{i=0}^{L-1-k} a_i b_{i+k} & 0 \leq k < L \\ \displaystyle\sum_{i=0}^{L-1+k} a_{i-k} b_i & -L < k < 0 \\ 0 & |k| \geq L \end{cases} \qquad (2)$$

By putting $\overline{a} = \overline{b}$, aperiodic auto-correlation (AAC) function is obtained, i.e.

$$A(z)A(z) = d_0 + d_1(z + z^{-1}) + \cdots + d_{L-1}\left(z^{L-1} + z^{-(L-1)}\right), \qquad (3)$$

where the $k$-th aperiodic auto-correlation coefficient $d_k$ is defined as the inner product of $\overline{a}$ on the overlap of a copy of itself shifted by $k$ positions, i.e.

$$d_k = \sum_{i=0}^{L-k-1} a_i a_{i+k} = a_0 a_k + a_1 a_{k+1} + \cdots + a_{L-k-1} a_{L-1}; \qquad 0 \leq k < L. \qquad (4)$$

2.2.1 Two-Shift Complementary Code Pairs

As already discussed, T-SCC pairs form a basis of the proposed SOQT-SCCP. These pairs were originally introduced in [14] and used for synthesis of VT-SCC code. Interested readers are referred to [14, 15], where they can find more information regarding VT-SCC code.
In the following some properties of T-SCC pairs necessary to design SOQT-SCCP are briefly listed. The T-SCC pairs consist of two two-shift complementary (T-SC) code elements of the sequence length $L = 2^n$ for $n \geq 1$. The term complementary means that the sum of AAC functions of T-SC code elements of a certain T-SCC pair is an impulse of magnitude $2L$ and sidelobe levels of zero. More precisely,
[0019]   **Definition 1.** *Let $\overline{a}, \overline{b} \in V$. We say that the ordered pair $(\overline{a};\overline{b})$ is a T-SCC pair if the associated polynomials A (z) and B(z) of $\overline{a}$ and $\overline{b}$ satisfy the identity*

$$A(z)A(z^{-1}) + B(z)B(z^{-1}) = 2L \qquad (5)$$

*in the Laurent polynomial ring $\mathbb{Z}$ [z,z⁻¹].*
Moreover, every second shift of the AAC function of each T-SC code element is zero, i.e.
**Definition 2.** *Let $(\overline{a};\overline{b})$ is a T-SCC pair. Then the 2k-th auto-correlation coefficients of $\overline{a}$ and $\overline{b}$ are zero, i.e.*

$$d_{2k}^{\overline{a}} = d_{2k}^{\overline{b}} = \sum_{i=0}^{L-2k-1} a_i a_{i+2k} = \sum_{i=0}^{L-2k-1} b_i b_{i+2k} = 0 \qquad 0 < k < L/2. \qquad (6)$$

Since every second shift of the AAC function of each T-SC code element is zero, the term two-shift is used in combination with the term complementary. Note that the vector $(a_0, a_1, \ldots, a_7)$ is a T-SC code element if $(a_0, a_2, a_4, a_6)$

and $(a_1, a_3, a_5, a_7)$ form a complementary pair, also known as Golay complementary (GC) pair. For example, (+++-) and (++-+) form a GC pair and thus (+++++--+) is a T-SC code element. This shows a relationship between T-SC code elements and GC pairs which can be further generalized as follows:

**Theorem 1.** *A vector $\overline{a} \in V$, $\overline{a} = (a_0, a_1,..., a_{L-1})$, is a T-SC code element iff vectors $(a_0, a_2,..., a_{L-2})$ and $(a_1, a_3,..., a_{L-1})$ form a GC pair.*

*Proof.* The $2k$-th auto-correlation coefficient of the vector $\overline{a}$ can be decomposed into two terms, i.e.

$$d_{2k}^{\overline{a}} = \sum_{i=0}^{L-2k-1} a_i a_{i+2k} = \sum_{i=0}^{\lfloor \frac{L-2k-1}{2} \rfloor} a_{2i} a_{2i+2k} + \sum_{i=0}^{\lfloor \frac{L-2k-1}{2} \rfloor} a_{2i+1} a_{2i+1+2k}.$$ It is easy to observe that this is precisely the sum of $k$-th aperiodic auto-correlation coefficients of the vectors $(a_0, a_2,..., a_{L-2})$ and $(a_1, a_3,..., a_{L-1})$ .

Therefore, $d_{2k}^{\overline{a}} = 0$ for $0 < k < L/2$ iff these vectors form a GC pair.

According to the Definitions 1 and 2, every T-SCC pair consists of two T-SC code elements which take for arbitrary non-zero shift of their AAC functions the opposite values. Theorem 1 provides a way to obtain T-SC code element of length $L = 2^n$ from a GC pair of length $L = 2^{n-1}$. T-SCC pair can be then constructed from given T-SC code element by various techniques, e.g. by using Definition 1 or by means of the following Lemma.

**Lemma 1.** *If $\overline{a} \in V$ is a T-SC code element and $\overline{b}$ is a vector such that*

$$b_i = \begin{cases} a_i & i \ is \ even \\ -a_i & i \ is \ odd \end{cases}$$

*then $(\overline{a}; \overline{b})$ form a T-SCC pair.*

*Proof.* It is necessary to show that for non-zero shift the AAC of $\overline{a}$ and $\overline{b}$ are of opposite values. For the even shift, the AAC is zero since $\overline{a}$ is a T-SC code element. For the odd shift $k$, the AAC is a sum of terms $u_i u_{i+k}$, where exactly one of the indices $i, i+k$ is even. Therefore, $v_i v_{i+k} = -u_i u_{i+k}$ and thus the sum of AAC functions is 0.

2.3 Synchronously orthogonal quadruplets of T-SCC pairs List some useful relations and identify some relevant properties of T-SC code elements.

**Lemma 2.** *Let $x_1, x_2,..., x_n$ be numbers of values $\pm 1$. Then*

*1. $x_i^2 = 1$ for i = 1, 2, ... , n*

*2. $x_i + x_j = 0 \Leftrightarrow x_i x_j = -1$ for $i, j \in \langle 1, n \rangle$*

*3. $x_1 + x_2 + \cdots + x_n = 0 \Rightarrow x_1 x_2 ... x_n = (-1)^k$ for n = 2k, $k \in \mathbb{N}$*

*4. $x_j x_k x_l x_m = -1 \Rightarrow x_{\pi(1)} x_{\pi(2)} + x_{\pi(3)} x_{\pi(4)} = 0$ for any permutation $\pi$ of $\{j, k, l, m\}$; $j, k, l, m \in \langle 1, n \rangle$.*

*5. $x_j x_k x_l x_m = -1 \Rightarrow (x_{\pi(1)} + x_{\pi(2)}) (x_{\pi(3)} + x_{\pi(4)}) = 0$ for any permutation $\pi$ of $\{j, k, l, m\}$; $j, k, l, m \in \langle 1, n \rangle$. Moreover, either $(x_{\pi(1)} + x_{\pi(2)}) = 0$ or $(x_{\pi(3)} + x_{\pi(4)}) = 0$ holds.*

*Proof.* The proof of *(i)* and *(ii)* is straightforward. *(iii):* sum of $n$ numbers of values $\pm 1$ is zero iff $n$ is even and exactly $\frac{n}{2}$ of these numbers are equal to 1 and $\frac{n}{2}$ to -1. Hence, $\prod_{i=1}^{n} x_i = (-1)^k$ . *(iv)* : it follows from the proof of *(ii)* and associative property of multiplication, e.g. $x_j x_k x_l x_m = (x_j x_k) (x_l x_m) = -1 \Rightarrow (x_j x_k) + (x_l x_m) = 0$. *(v)* : since $j, k, l, m$ stand for any number from $\langle 1,n \rangle$ one can write that $x_{\pi(1)} x_{\pi(2)} x_{\pi(3)} x_{\pi(4)} = -1$. By *(iv)*, the following two equations can be obtained: $x_{\pi(1)} x_{\pi(3)} + x_{\pi(2)} x_{\pi(4)} = 0$, $x_{\pi(1)} x_{\pi(4)} + x_{\pi(2)} x_{\pi(3)} = 0$. Their sum gives $x_{\pi(1)} (x_{\pi(3)} + x_{\pi(4)}) + x_{\pi(2)} (x_{\pi(3)} + x_{\pi(4)}) = (x_{\pi(1)} + x_{\pi(2)}) (x_{\pi(3)} + x_{\pi(4)}) = 0$. To prove the second part, let us consider a contradiction, i.e. both $(x_{\pi(1)} + x_{\pi(2)}) = (x_{\pi(3)} + x_{\pi(4)}) = 0$. However, such a condition implies that $x_j x_k x_l x_m = 1$, which contradicts the assumption.

**Lemma 3**. *Let $\overline{c}, \overline{d} \in V$, $\overline{c} = (c_0, c_1,...,c_{L-1})$, $\overline{d} = (d_0, d_1,..., d_{L-1})$ form a T-SCC pair $(\overline{c}; \overline{d})$. Then the vector pair*

*$((c_m, d_m); (c_{L-m-1}, d_{L-m-1}))$ is orthogonal for $m \in \langle 0, \frac{L}{2} - 1 \rangle$.*

*Proof.* An ordered pair $(\bar{c}; \bar{d})$ is a T-SCC pair iff $\sum_{i=0}^{L-k-1} c_i c_{i+k} + d_i d_{i+k} = 0$ holds for $0 < k < L$. If $k = L$ - 1 then $c_0 c_{L-1} + d_0 d_{L-1} = 0$, i.e. $((c_0, d_0); (c_{L-1}, d_{L-1}))$ is an orthogonal vector pair corresponding to $m = 0$. Consider the equation for $k = L-m-1$, i.e. $c_0 c_k + d_0 d_k + c_1 c_{k+1} + d_1 d_{k+1} + \cdots + c_{L-k-1} c_{L-1} + d_{L-k-1} d_{L-1} = 0$. By Lemma 2

$$\prod_{i=0}^{m} c_i c_{L-m-1+i} d_i d_{L-m-1+i} = (-1).^{m+1} \qquad (7)$$

Reformulating (7) for $m'=m$-1 yields

$$\prod_{i=0}^{m'} c_i c_{L-m'-1+i} d_i d_{L-m'-1+i} = (-1)^{m'+1} = (-1).^{m} \qquad (8)$$

Dividing (7) by (8) gives

$$c_m c_{L-m-1} d_m d_{L-m-1} = -1, \qquad (9)$$

which implies that $((c_m, d_m); (c_{L-m-1}, d_{L-m-1}))$ is an orthogonal pair. Only last $L/2$ equations out of $L$ - 1 possible were considered, from which it is possible to obtain relations between particular coordinates of $\bar{c}$ and $\bar{d}$, respectively. Therefore, it is sufficient to define $k$ for the range $\frac{L}{2} \leq k < L$. Then from $m = L - k - 1$ one gets the interval $\langle 0, \frac{L}{2} - 1 \rangle$, where (9) holds.

2.3.1 Synthesis of SOQT-SCCP

Introduce the interleaving operator $I$ which interleaves coordinates of two vectors $\bar{x}$ and $\bar{y}$, both of length $L$, as follows

$$I\left[\bar{x}; \bar{y}\right] = (x_0, y_0, x_1, y_1, \ldots, x_{L-1}, y_{L-1}). \qquad (10)$$

In [3] Golay showed that interleaving the coordinates of any GC pair produces an element of GC pair of twice their length. Furthermore, from Theorem 1 follows that if the interleaving operator is applied on T-SCC pair then it produces a T-SC code element, i.e. it preserves the two-shift property.

**Lemma 4.** *Let $X_i = (\bar{x}_0; \bar{x}_1)$ be a T-SCC pair with T-SC code elements $\bar{x}_0$ and $\bar{x}_1$ of length L. Let $X_{i+1}$ be another T-SCC pair obtained from $X_i$ according to following rule: $X_{i+1} = (\tilde{x}_1; \tilde{x}_0)$. Then the j-th columns of $X_i$ and $X_{i+1}$ are orthogonal for $0 \leq j \leq L$ - 1.*

*Proof.* From the composition rule of Lemma 4 follows that for the T-SCC pair $(\bar{x}_0; \bar{x}_1)$ in $X_i$ there is a T-SCC pair in $X_{i+1}$ obtained from $(\bar{x}_0; \bar{x}_1)$ by simple reordering and reversing, i.e. $(\tilde{x}_1; \tilde{x}_0)$. Then inner product of the $j$-th columns, $0 \leq j \leq L$ - 1, of $(\bar{x}_0; \bar{x}_1)$ and $(\bar{x}_1; \bar{x}_0)$ can be written as: $x_{0,j} x_{1,L-j-1} + x_{1,j} x_{0,L-j-1}$. From the proof of Lemma 3 follows that $x_{0,j} x_{0,L-j-1} + x_{1,j} x_{1,L-j-1} = 0$. By Lemma 2 *(ii)* and *(iv)* we get: $x_{0,j} x_{0,L-j-1} x_{1,j} x_{1,L-j-1} = -1 \Leftrightarrow x_{0,j} x_{1,L-j-1} + x_{1,j} x_{0,L-j-1} = 0$, which means that the $j$-th columns of $(\bar{x}_0; \bar{x}_1)$ and $(\tilde{x}_1; \tilde{x}_0)$ are orthogonal.

By Lemma 4 it is possible to obtain two column-wise orthogonal T-SCC pairs of the same length. It will be shown later that structure of the T-SCC pairs specified by Lemma 4 exhibits orthogonality associated with certain shifts of ACC function and thus in the following term synchronously orthogonal that better expresses relation between these pairs is used. It is evident that if the composition rule specified by Lemma 4 will be applied on an initial T-SCC pair $X_i$ more than once, one gets again the same T-SCC pairs, i.e. $X_i$ and $X_{i+1}$. Therefore, in order to produce a quadruplet of synchronously orthogonal T-SCC pairs an orthogonalization matrix with structure specified by the following Lemma is exploited.

**Lemma 5.** *Let* $\mathbf{H_M}$ *be a Hadamard matrix of order M= $2^m$, $m \geq 1$ . Let* $\mathbf{H_L}$ *denote the orthogonalization matrix*

$$\mathbf{H_L} = \left( \underbrace{\mathbf{H_M}, \mathbf{H_M}, \ldots, \mathbf{H_M}}_{L/M} \right) , \text{ whereby } L = 2^n, n > m.$$ *Then the rows of sub-matrices* $\mathbf{H_K}$ *delimited by the columns*

$0 \div kM$ - 1, $1 \leq k \leq \frac{L}{M}$ *of* $\mathbf{H_L}$ *are orthogonal.*

*Proof.* This is an immediate consequence of the concatenation procedure of the orthogonal matrices $\mathbf{H_M}$.

Now, define the algorithm for the synthesis of SOQT-SCCP.

**Theorem 2.** *Let* $\mathbf{H_L} = (\bar{h}_0; \bar{h}_1)$ *be a Hadamard matrix of order 2 and number of columns L = $2^n$, constructed by Lemma 5, and let $X_{i+1}$ is a T-SCC pair obtained from T-SCC pair $X_i$ according to Lemma 4. Then the matrix Y =*

$(Y_0, Y_1, Y_2, Y_3)$, *wherein* $Y_i = X_{i \bmod 2} \otimes \bar{h}_{\lfloor \frac{i}{2} \rfloor}$ *for i = 0,1, 2, 3, represents synchronously orthogonal quadruplet of T-SCC pairs each having impulsive AAC function with a peak magnitude of 2L.*

*Proof.* Examine the orthogonality of two sub-matrices, denoted by $Y_i$ and $Y_j$, selected from the matrix Y. We start with the case when *i* and *j* possess the same parity, which means that the sub-matrices $Y_i$ and $Y_j$ are generated from the same T-SCC pair but using different rows of the orthogonalization matrix. Without loss of generality, let $Y_i = X_i \otimes \bar{h}_0$ and $Y_j = X_i \otimes \bar{h}_1$, where $\bar{h}_0, \bar{h}_1$ stand for two different rows of an orthogonalization matrix. Then the sum of inner products of *l*-th columns of $Y_i$ and $Y_j$ for $l = 0,1, \ldots , L$ - 1 is

$$\sum_{l=0}^{L-1} h_{0,l} x_{0,l}^{(i)} h_{1,l} x_{0,l}^{(i)} + x_{1,l}^{(i)} h_{0,l} x_{1,l}^{(i)} h_{1,l} = 2 \sum_{l=0}^{L-1} h_{0,l} h_{1,l} = 0, \qquad (11)$$

where $x_{k,l}^{(i)}$ denotes the term of T-SCC pair $X_i$ with the coordinates (*k*, *l*). Hence, the sub-matrices $Y_i$ and $Y_j$ are synchronously orthogonal.

Now, inspect the case when *i* and *j* possess the opposite parity, which means that the sub-matrices $Y_i$ and $Y_j$ are generated from different T-SCC pairs. Then the sum of the inner products of *l*-th columns of $Y_i$ and $Y_j$ for $l = 0,1,\ldots, L$ - 1 is

$$\sum_{l=0}^{L-1} h_{p,l} x_{0,l}^{(i)} h_{q,l} x_{0,l}^{(i+1)} + h_{p,l} x_{1,l}^{(i)} h_{q,l} x_{1,l}^{(i+1)} = \sum_{l=0}^{L-1} h_{p,l} h_{q,l} \left( x_{0,l}^{(i)} x_{0,l}^{(i+1)} + x_{1,l}^{(i)} x_{1,l}^{(i+1)} \right) , \qquad (12)$$

where indexes $p, q \in \{0,1\}$ . By Lemma 4, (12) is equal to zero independent of $h_{p,l} h_{q,l}$, because the *l*-th columns of $X_i$ and $X_{i+1}$ are orthogonal for $l = 0,1,\ldots, L$ - 1. Therefore, $Y_i$ and $Y_j$ are again synchronously orthogonal.

Now, evaluate the AAC function of $Y_q = X_j \otimes \bar{h}_p$, for $q \in \{0,1,2,3\}$ and $j, p \in \{0,1\}$. According to (4) , the *k*-th aperiodic auto-correlation coefficient $d_k$ for the first T-SC code element of $X_j$ is

$$d_k = \sum_{i=0}^{L-k-1} x_{0,i}^{(j)} h_{p,i} x_{0,i+k}^{(j)} h_{p,i+k}; \qquad 0 \leq k < L. \qquad (13)$$

Similarly, for the second T-SC code element of $X_j$, the *k*-th aperiodic auto-correlation coefficient $e_k$ can be defined by

$$e_k = \sum_{i=0}^{L-k-1} x_{1,i}^{(j)} h_{p,i} x_{1,i+k}^{(j)} h_{p,i+k}; \qquad 0 \le k < L. \qquad (14)$$

Then for the $k$-th correlation shift one can get

$$A(k) = d_k + e_k = \sum_{i=0}^{L-k-1} h_{p,i} h_{p,i+k} \left( x_{1,i}^{(j)} x_{1,i+k}^{(j)} + x_{0,i}^{(j)} x_{0,i+k}^{(j)} \right). \qquad (15)$$

Since for the construction of $\mathbf{H_L} = (\overline{h}_0; \overline{h}_1)$, according to Lemma 5 $h_{p,0} h_{p,k} = h_{p,i} h_{p,i+k}$ holds for $0 \le k \le L - 1$ and $0 \le i \le L - k - 1$, (15) can be rewritten as

$$A(k) = d_k + e_k = h_{p,0} h_{p,k} \sum_{i=0}^{L-k-1} \left( x_{1,i}^{(j)} x_{1,i+k}^{(j)} + x_{0,i}^{(j)} x_{0,i+k}^{(j)} \right). \qquad (16)$$

Because $\bar{x}_0^{(j)}$ and $\bar{x}_1^{(j)}$ form a T-SCC pair, the sum in (16) is zero for the non-zero shift $k$. Thus, $A(k) = 0$ for $k \neq 0$. If $k = 0$, $\left( x_{1,i}^{(j)} x_{1,i+k}^{(j)} + x_{0,i}^{(j)} x_{0,i+k}^{(j)} \right) = 2$ and $h_{p,i} h_{p,i+k} = 1$. Therefore, $A(0) = 2L$.

Synthesis procedure described above can be further simplified if the orthogonalization matrix $\mathbf{H_L}$ consists of concatenated Sylvester-type Hadamard sub-matrices $\mathbf{H_2}$. For example, if $\mathbf{H_2} = \left( \begin{smallmatrix} + & + \\ + & - \end{smallmatrix} \right)$ then by applying Theorem 2 the following collection of synchronously orthogonal T-SCC pairs can be generated

$$Y_0 = X_0 \otimes \bar{h}_0 = \left( \begin{smallmatrix} \bar{x}_0 \\ \bar{x}_1 \end{smallmatrix} \right), \quad Y_1 = X_1 \otimes \bar{h}_0 = \left( \begin{smallmatrix} \bar{x}_1 \\ \bar{x}_0 \end{smallmatrix} \right), \quad Y_2 = X_0 \otimes \bar{h}_1 = \left( \begin{smallmatrix} \bar{x}_1 \\ \bar{x}_0 \end{smallmatrix} \right), \quad Y_3 = X_1 \otimes \bar{h}_1 = \left( \begin{smallmatrix} -\bar{x}_0 \\ -\bar{x}_1 \end{smallmatrix} \right). \qquad (17)$$

It was proved above that any two T-SCC pairs from (17) are synchronously orthogonal. Moreover, as can be seen from (17) to construct SOQT-SCCP only three operations, namely reordering, reversing and negating are needed.

In the sequel, only this construction due to its very low complexity is considered. It was shown that ACC function between $Y_i$ and $Y_j$, $i \neq j$; $i,j \in \{0,1,2,3\}$ from (17) vanishes for zero shift. This observation can be sufficient if traditional direct sequence spreading in a synchronous environment is considered. However, for more sophisticated techniques, such as offset stacked spreading, value of ACC in each shift is needed.

Begin with the investigation of ACC function between $Y_0$ and $Y_2$. Rewrite these T-SCC pairs into the following matrix form

$$Y_0 = \left( \begin{matrix} (x_{0,0}, x_{0,1}, x_{0,2}, x_{0,3}, \dots, x_{0,L-3}, x_{0,L-2}, x_{0,L-1}) \\ (x_{1,0}, x_{1,1}, x_{1,2}, x_{1,3}, \dots, x_{1,L-3}, x_{1,L-2}, x_{1,L-1}) \end{matrix} \right), \qquad (18)$$

and

$$Y_2 = \left( \begin{array}{c} (x_{1,0},x_{1,1},x_{1,2},x_{1,3},\ldots,x_{1,L-3},x_{1,L-2},x_{1,L-1}) \\ (x_{0,0},x_{0,1},x_{0,2},x_{0,3},\ldots,x_{0,L-3},x_{0,L-2},x_{0,L-1}) \end{array} \right) . \tag{19}$$

Consider that $X_0(z)$ and $X_1(z)$ are associated polynomials of T-SC code elements $\bar{x}_0$ and $\bar{x}_1$. Then ACC function of $Y_0$ and $Y_2$ can be expressed as

$$X_0(z)X_1(z) + X_1(z)X_0(z). \tag{20}$$

In order to get value of (20) for each shift $k$, we need to evalute sum $c_k^{(0)} + c_k^{(1)}$, where $c_k^{(0)}$ and $c_k^{(1)}$ is $k$-th aperiodic cross-correlation coefficient of $X_0(z)X_1(z)$ and $X_1(z)X_0(z)$, respectively.

If $k$ is odd, i.e. $k = 2r + 1$, $r \in \mathbb{Z}$, then

$$\begin{aligned} c_{2r+1}^{(0)} + c_{2r+1}^{(1)} &= \sum_{i=0}^{\frac{L-2r-2}{2}} x_{0,2i}x_{1,2(i+r)+1} + x_{1,2i}x_{0,2(i+r)+1} \\ &\quad + \sum_{i=0}^{\frac{L-2r-2}{2}-1} x_{0,2i+1}x_{1,2(i+r+1)} + x_{1,2i+1}x_{0,2(i+r+1)} \end{aligned} \tag{21}$$

for $0 \leq r < \frac{L}{2}$ and

$$\begin{aligned} c_{2r+1}^{(0)} + c_{2r+1}^{(1)} &= \sum_{i=0}^{\frac{L+2r}{2}} x_{0,2(i-r)-1}x_{1,2i} + x_{1,2(i-r)-1}x_{0,2i} \\ &\quad + \sum_{i=0}^{\frac{L+2r}{2}-1} x_{0,2(i-r)}x_{1,2i+1} + x_{1,2(i-r)}x_{0,2i+1} \end{aligned} \tag{22}$$

for $-\frac{L}{2} \leq r < 0,$ respectively. The case when $|r| > \frac{L}{2}$ is omitted, since by (2) it is zero.

Suppose that T-SC code element $\bar{x}_1$ is obtained by applying Lemma 1 on $\bar{x}_0$. Then (21) and (22) becomes

$$\begin{aligned} c_{2r+1}^{(0)} + c_{2r+1}^{(1)} &= \sum_{i=0}^{\frac{L-2r-2}{2}} - x_{0,2i}x_{0,2(i+r)+1} + x_{0,2i}x_{0,2(i+r)+1} \\ &\quad + \sum_{i=0}^{\frac{L-2r-2}{2}-1} -x_{0,2i+1}x_{0,2(i+r+1)} + x_{0,2i+1}x_{0,2(i+r+1)} \tag{23} \\ &= 0 \end{aligned}$$

for $0 \le r < \frac{L}{2}$ and

$$
\begin{aligned}
c_{2r+1}^{(0)} + c_{2r+1}^{(1)} &= \sum_{i=0}^{\frac{L+2r}{2}} x_{0,2(i-r)-1}x_{0,2i} - x_{0,2(i-r)-1}x_{0,2i} \\
&\quad + \sum_{i=0}^{\frac{L+2r}{2}-1} x_{0,2(i-r)}x_{0,2i+1} - x_{0,2(i-r)}x_{0,2i+1} \qquad (24) \\
&= 0
\end{aligned}
$$

for $-\frac{L}{2} \le r < 0.$ Therefore, (20) takes zero values for all odd shifts.

If $k$ is even, i.e. $k = 2r$, $r \in \mathbb{Z}$ and $\bar{x}_1$ is obtained from $\bar{x}_0$ by means of Lemma 1, then

$$
\begin{aligned}
c_{2r}^{(0)} + c_{2r}^{(1)} &= \sum_{i=0}^{\left\lfloor \frac{L-1-2r}{2} \right\rfloor} x_{0,2i}x_{0,2(i+r)} + x_{0,2i}x_{0,2(i+r)} \\
&\quad + \sum_{i=0}^{\left\lfloor \frac{L-1-2r}{2} \right\rfloor} - x_{0,2i+1}x_{0,2(i+r)+1} - x_{0,2i+1}x_{0,2(i+r)+1} \qquad (25)
\end{aligned}
$$

for $0 \le r < \frac{L}{2}$ and

$$
\begin{aligned}
c_{2r}^{(0)} + c_{2r}^{(1)} &= \sum_{i=0}^{\left\lfloor \frac{L-1+2r}{2} \right\rfloor} x_{0,2(i-r)}x_{0,2i} + x_{0,2(i-r)}x_{0,2i} \\
&\quad + \sum_{i=0}^{\left\lfloor \frac{L-1+2r}{2} \right\rfloor} - x_{0,2(i-r)+1}x_{0,2i+1} - x_{0,2(i-r)+1}x_{0,2i+1}. \qquad (26)
\end{aligned}
$$

for $-\frac{L}{2} < r < 0,$ respectively.

It can be shown that if T-SC code element $\bar{x}_0$ is of the form $\bar{x}_0 = I\left[\bar{x}_0'; \bar{x}_1'\right]$, where $\left(\bar{x}_0'; \bar{x}_1'\right)$ is a T-SCC pair with the T-SC code elements of length $L'=L/2$, then for $r$ being an even number, (25) and (26) take zero values. In all other cases the ACC value is non-zero. Hence, (20) shows the following nature

$$
X_0(z)X_1(z) + X_1(z)X_0(z) = (0\,x\,0\,0\,0\,x\,0\,0\,0\,x\,0\,0\,0\,x \ldots 0\,0\,0\,x\,0), \qquad (27)
$$

where $x$ stands for arbitrary non-zero value. Note that (27) holds also for ACC function between $Y_1$ and $Y_3$, since reversing is applied on both T-SCC pairs.

Now, observe ACC function between $Y_i$ and $Y_j$, where $i \in \{0,2\}$ and $j \in \{1,3\}$, Without loss of generality, investigate AAC function of $Y_0$ and $Y_1$, i.e.

$$X_0(z)\tilde{X}_1(z) + X_1(z)\tilde{X}_0(z) = 2X_1(z)\tilde{X}_0(z). \tag{28}$$

Follow the same procedure like for T-SCC pairs $Y_0$ and $Y_2$. Thus, if $k = 2r + 1$

$$c_{2r+1} = \begin{cases} 2\left( \displaystyle\sum_{i=0}^{\frac{L-2r-2}{2}} x_{0,2i}x_{0,L-2(i+r)-2} - \sum_{i=0}^{\frac{L-2r-2}{2}-1} x_{0,2i+1}x_{0,L-2(i+r)-3} \right) & \text{for } 0 \le r < \frac{L}{2}, \\ 2\left( \displaystyle\sum_{i=0}^{\frac{L+2r}{2}} - x_{0,2(i-r)-1}x_{0,L-2i-1} + \sum_{i=0}^{\frac{L+2r}{2}-1} x_{0,2(i-r)}x_{0,L-2(i+1)} \right) & \text{for } -\frac{L}{2} \le r < 0. \end{cases} \tag{29}$$

If $k = 2r$ then

$$c_{2r} = \begin{cases} 2\left( \displaystyle\sum_{i=0}^{\lfloor \frac{L-1-2r}{2} \rfloor} x_{0,2i}x_{0,L-2(i+r)-1} - \sum_{i=0}^{\lfloor \frac{L-1-2r}{2} \rfloor} x_{0,2i+1}x_{0,L-2(i+r+1)} \right) & \text{for } 0 \le r < \frac{L}{2}, \\ 2\left( \displaystyle\sum_{i=0}^{\lfloor \frac{L-1+2r}{2} \rfloor} x_{0,2(i-r)}x_{0,L-2i-1} - \sum_{i=0}^{\lfloor \frac{L-1+2r}{2} \rfloor} x_{0,2(i-r)+1}x_{0,L-2i-2} \right) & \text{for } -\frac{L}{2} < r < 0. \end{cases} \tag{30}$$

From (29) follows that $c_{2r+1}$ never takes zero value, because one of the sum is defined for an odd number of summands while the second one for even number. This means that ACC function described by (28) takes on at each odd shift a non-zero value. If the second terms of (30) are written in a reversed order, then

$$\begin{aligned} c_{2r} &= 2\left( \sum_{i=0}^{\lfloor \frac{L-1-2r}{2} \rfloor} x_{0,2i}x_{0,L-2(i+r)-1} - \sum_{j=0}^{\lfloor \frac{L-1-2r}{2} \rfloor} x_{0,L-2(j+r)-1}x_{0,2j} \right) \\ &= 0 \end{aligned} \tag{31}$$

for $0 \le r < \frac{L}{2}$ and

$$c_{2r} = 2 \left( \sum_{i=0}^{\lfloor \frac{L-1+2r}{2} \rfloor} x_{0,2(i-r)} x_{0,L-2i-1} - \sum_{j=0}^{\lfloor \frac{L-1+2r}{2} \rfloor} x_{0,L-2j-1} x_{0,2(j-r)} \right)$$

$$= 0 \qquad\qquad (32)$$

for $-\frac{L}{2} < r < 0,$ respectively.

From the above analysis it can be seen that ACC function of $Y_0$ and $Y_1$ takes non-zero values for all odd shifts and vanishes for all even shifts. Therefore, (28) possesses the following structure

$$2X_1(z)\tilde{X}_0(z) = (x\,0\,x\,0\,x\,0\,x\,0\,x \ldots 0\,x\,0\,x). \qquad (33)$$

Note that T-SCC pairs $Y_2$ and $Y_3$ have the same architecture as $Y_0$ and $Y_1$, i.e. one T-SCC pair is reordered and reversed replica of another one (the negation applied in $Y_3$ does not affect the analysis). Hence, (33) holds also for ACC function of $Y_2$ and $Y_3$.

It remains to analyse ACC function between $Y_0$ and $Y_3$ or $Y_1$ and $Y_2$, i.e.

$$X_0(z)\tilde{X}_0(z) + X_1(z)\tilde{X}_1(z). \qquad (34)$$

If T-SC code element $\bar{x}_1$ is obtained from $\bar{x}_0$ by means of Lemma 1, then every even shift of ACC function is zero. This follows from the fact that the cross-correlation $X_1(z)\tilde{X}_1(z)$ contains the same products of the corresponding parts of $\bar{x}_0$ and $\bar{x}_1$ as $X_0(z)\tilde{X}_0(z)$, however, due to altering relationship between $\bar{x}_0$ and $\bar{x}_1$, with the opposite sign at every second shift. Therefore, (34) exhibits the structure defined by (33) as well.

**Example 1.** *Generate SOQT-SCCP of length L = 8. The initial T-SC code element* $\bar{x}_0$ *of length L = 8 can be obtained, for example, by interleaving elements of the following GC pair ((+++-);(+-++)), i.e.* $\bar{x}_0 = I\,[(+++-);(+-++)]=(+++-++-+)$. *The second T-SC code element* $\bar{x}_1$ *is generated by the altering rule given in Lemma 1, i.e.* $\bar{x}_1 = (+-+++---)$ .

*Consider further orthogonalization matrix* $H_L$ *constructed by L/2 concatenated replicas of* $H_2 = \begin{pmatrix} +\ + \\ +\ - \end{pmatrix}$. *Then SOQT-SCCP is formed by the following sub-matrices*

$$Y_0 = \begin{pmatrix} \bar{x}_0 \\ \bar{x}_1 \end{pmatrix} = \begin{pmatrix} +\,+\,+\,-\,+\,+\,-\,+ \\ +\,-\,+\,+\,+\,-\,-\,- \end{pmatrix}, \quad Y_2 = \begin{pmatrix} \bar{x}_1 \\ \bar{x}_0 \end{pmatrix} = \begin{pmatrix} +\,-\,+\,+\,+\,-\,-\,- \\ +\,+\,+\,-\,+\,+\,-\,+ \end{pmatrix},$$

$$Y_1 = \begin{pmatrix} \bar{x}_1 \\ \bar{x}_0 \end{pmatrix} = \begin{pmatrix} -\,-\,-\,+\,+\,+\,-\,+ \\ +\,-\,+\,+\,-\,+\,+\,+ \end{pmatrix}, \quad Y_3 = \begin{pmatrix} -\bar{x}_0 \\ -\bar{x}_1 \end{pmatrix} = \begin{pmatrix} -\,+\,-\,-\,+\,-\,-\,- \\ +\,+\,+\,-\,-\,-\,+\,- \end{pmatrix}.$$

*One can check that AAC of all* $Y_i$, *i = 0, 1, 2,3 is an impulse of magnitude* 16 *and sidelobe level of zero. As for the ACC functions between arbitrary* $Y_i$ *and* $Y_j$, *for i≠j, i, j ∈ {0,1,2,3}, they possess the nature defined by (27) and (33), respectively. For example,*

$$X_0(z)X_1(z) + X_1(z)X_0(z) = (\,0, -4, 0, 0, 0, 4, 0, 0, 0, 4, 0, 0, 0, -4, 0\,),$$

$$X_1(z)\tilde{X}_1(z) + X_0(z)\tilde{X}_0(z) = \left( 2, 0, 6, 0, -6, 0, -2, 0, 6, 0, 2, 0, 6, 0, 2 \right)$$

*and*

$$-X_1(z)\ \tilde{X}_0(z) - X_0(z)\tilde{X}_1(z) = \left( 2, 0, 2, 0, 2, 0,, 2, 0, 6, 0, -10, 0, -2, 0, -2 \right).$$

2.3.2 Number of supported users by SOQT-SCCP

Most of the applications based on CC codes or MOCS suppose to use a multi-carrier CDMA system. This follows from the fact that there is no orthogonality between particular sequences or codes from a certain set or flock. Therefore, it is necessary to separate them by a suitable resource. In case of multi-carrier CDMA system we use for their separation sub-carriers (frequencies).

Consider a multi-carrier CDMA system with traditional direct sequence spreading carried out at each of $N$ sub-carriers. For simplicity assume that multi-carrier modulation is accomplished by means of fast algorithm for Fourier transform. Therefore, $N$ has to be a power of two, i.e. $N = 2^n,\ n \geq 1$. In order to maximize bandwidth efficiency assume multiplexing of users in both code and frequency domains. Then number of supported users by a certain class of complementary codes or sets of sequences based on complementary principle can be calculated as follows

$$N_u = \frac{NR}{P}, \qquad (35)$$

where P is number of sequences or codes within flock or set and R is the order, i.e. number of different flocks or mutually orthogonal sets of given length.

Table 1: Comparison of number of supported users by different complementary codes

| Number of sub-carriers | 4 | 16 | 64 | 256 | 1024 | $N$ |
|---|---|---|---|---|---|---|
| CC codes | 4 | 16 | 64 | 256 | 1024 | $N$ |
| MOCS | 4 | 16 | 64 | 256 | 1024 | $N$ |
| VT-SCC | 4 | 8 | 32 | 128 | 512 | $N/2$ |
| SOQT-SCCP | 8 | 32 | 128 | 512 | 2048 | $2N$ |

Table 1 shows comparison of number of users supported by binary complementary codes for the same bandwidth and code length. Since CC codes are defined only for the lengths $L = 4^n$, to have comparable results the evaluation is restricted only to power of four. Note that SOQT-SCCP similarly to MOCS or VT-SCC are defined for the code length $L = 2^n,\ n > 1$. As can be seen, number of users supported by SOQT-SCCP and thus bandwidth efficiency is at least two-times higher than other classes of complementary codes or sets of sequences based on complementary principle can achieve.

2.3.3 Possible application of SOQT-SCCP

The SOQT-SCCP can be used in any application designed for MOCS or CC codes with modest modifications reflecting the structure and properties of SOQT-SCCP. For example, CC codes can be replaced by SOQT-SCCP in multi-carrier CDMA system based on the offset stacked spreading technique [12] to increase the capacity of this very attractive system or as common spreading codes in a multi-carrier direct sequence CDMA system similar to that proposed in [11].

Increased capacity of SOQT-SCCP is achieved due to the lowest possible cardinality of the set which is formed by one T-SCC pair. Such a structure can be considered as a great benefit, in particular if higher number of users has to be supported by the system. On the other hand, it may suffer from the lack of diversity in the channel with frequency selective fading, especially if certain sub-carriers experience deep fades. However, this drawback can be easily compensated by allocating more resources (sub-carriers) to one user or service with repeating use of the assigned T-SCC pair in the frequency domain. Figure 1 shows exemplary resource allocation in multi-carrier CDMA system with SOQT-SCCP. If allocation pattern assigned to user #1 who allocates all available sub-carriers is used, then it is possible to transmit with the highest possible frequency diversity. However, in this case only four users can be in the system providing that no additional multiplexing, like e.g. TDMA, is considered.

Another important characteristic attribute of SOQT-SCCP is their high flexibility and the best possible allocation granularity that can be particularly beneficial for multirate data transmission in multimedia services. Since T-SCC pairs consist of only two T-SC code elements, it is possible to allocate arbitrary even number of the resources with no impact on the order, like it is in VT-SCC code. Chen et. al. proposed in [12] a unique isotropic spreading method for multi-carrier CDMA systems based on CC codes, which they called offset stacked spreading. This technique can easily slow down or increase data transmission by simple shifting more than one chip between two consecutive offset stacked bits to the right or left. Because SOQT-SCCP belongs to the family of complementary codes, they can also be implemented in such a system with the advantage of increased capacity. As shown in Figure 1, high flexibility of SOQT-SCCP permits to allocate different patterns to different users or services according to their data rate requirements. For example, user #2 employs only one T-SCC pair, while user #3 employs two T-SCC pairs with the T-SC code elements transmitted over four sub-carriers.

To demonstrate performance of SOQT-SCCP in the orthogonal multi-carrier CDMA system with offset stacked spreading, some simulations assuming MAI-AWGN channel, perfect synchronization, ideal modulation and demodulation process have been carried out. From the correlation analysis conducted in Section 2.3.1 follows that every 4-th shift of ACC function is zero. Therefore, if offset stacked spreading is employed, to guarantee MAI-free transmission, only offsets being integer multiples of four can be used. Otherwise contribution of interfering users contaminates shifts with victim's information and thus increases probability of erroneous detection. This means that the rate change can be made at the multiples of four. The BER performance of SOQT-SCCP for different number of users is evaluated and compared to CC codes with the same processing gain of 64 and four-chip offset between two neighboring offset stacked bits.

Figure 3 shows that SOQT-SCCP under conditions mentioned above reach the same performance as CC codes. The next solution that can preserve high capacity of SOQT-SCCP and concurrently compensate for the lack of diversity is the use of orthogonal frequency hopping. This well-known technique changes position of SOQT-SCCP assigned to one group of users in the frequency domain, and thus increases frequency diversity. An illustrative example of such a solution is depicted in Figure 2. In order to ensure orthogonality, the whole quadruplet of T-SCC pairs assigned to group of four users has to be hopped. This produces quite strict demand for synchronization accuracy between users' transceivers.

Due to the non-ideal ACC function of SOQT-SCCP, all the promising and attractive features are achieved at the expense of the requirement for synchronous transmission, as orthogonality is guaranteed only for mutliple-of 4-shift of ACC function. Most significantly, this fact produces some constraints on the communication channel. In a singlepath channel the influence of imperfect ACC of SOQT-SCCP on MAI can be suppressed by ensuring synchronous transmission.

However, in a multipath environment the effect of delayed signal replicas that causes multipath interference (MI) must be taken into account. Since the AAC of the code sets is ideal, the delayed replicas of the signal of interest are harmless as far as MAI is concerned. On the contrary, ACC contributes to the MAI severely and its effect depends on the delays of the reflected waves. In wireless channels number of delayed waves and the actual delays are by nature unpredictable. If we assume their uniform distribution, then the ACC will degrade the performance due to MAI considerably. However, in applications and environments where the inter-path and inter-user delays can follow the desired offsets, i.e. fall within the respective intervals of multiple-of four of the chip duration, then the isotropic MAI-free and MI-free communication can be enjoyed even over the multipath channel. In this case, the data recovery is achieved with a simple correlator, without using any complex receiver implementations, such as MRC-RAKE, MUD, etc.

References

[1] M.J.E. Golay, "Multislit spectrometry," Journal of the Optical Society of America, Vol. 39, pp. 437-444, 1949.

[2] M.J.E. Golay, "Static multislit spectrometry and its application to the panoramatic display of infrared spectra," Journal of the Optical Society of America, Vol. 41, pp. 468-472, 1951.

[3] M.J.E. Golay, "Complementary series," IRE Transactions on Information Theory, IT-7, pp. 82-87, April 1961.

[4] G. Welti, "Quaternary codes for pulsed radar, " IEEE Transactions on Information Theory, vol. IT-6, pp. 400-408, June 1960.

[5] R. Turyn, "Ambiguity Functions of complementary sequences," IEEE Transactions on Information Theory, vol. IT-9, pp. 46-47, Jan. 1963.

[6] Y. Taki, H. Miyakawa, M. Hatori, and S. Namba, "Even-shift orthogonal sequences," IEEE Transactions on Information Theory, vol. IT-15, pp. 295-300, March 1969.

[7] R. Siwaswamy, "Multiphase complementary codes," IEEE Transactions on Information Theory, vol. IT-24, pp. 546-552, Sept. 1978.

[8] R. L. Frank, "Polyphase complementary codes," IEEE Transactions on Information Theory, vol. IT-26, pp. 641-647, Nov. 1980.

[9] C.-C. Tseng and C.L. Liu, "Complementary sets of sequences", IEEE Transactions on Information Theory, vol. IT-18, pp.644-652, Sept. 1972.

[10] N. Suehiro and M. Hatori, "N-shift cross-orthogonal sequences," IEEE Transactions on Information Theory, vol. IT-34, pp.143-146, Jan. 1988.

[11] S.M. Tseng and M.R. Bell, "Asynchronous multicarrier DS-CDMA using mutually orthogonal complementary sets of sequences," IEEE Transactions on Comm., vol. 48, pp.53-59, Jan. 2000.

[12] H.H. Chen, I.F. Yeh and N. Suehiro, "A multicarrier CDMA architecture based on orthogonal complementary codes for new generations of wideband wireless communications", IEEE Commun. Mag. vol. 39, pp. 126-135, Oct. 2001.

[13] Xiaojing Huang and Yunxin Li, "Scalable complete complementary sets of sequences," GLOBECOM 2002, vol. 2, pp.1056 - 1060, Nov. 2002.

[14] P. Svac, "Variable Two-Shift Complete Complementary Code", EUROCON 2005, pp.482-485, Nov. 2005.

[15] P. Svac and M. Piekov, "Method for transmitting signals in a communications system," *Patent application,* WO 2005/039081 A1, 2005.

**Claims**

1. A method for transmitting signals in a communications system based on any spreading technique employing synchronously orthogonal quadruplets of two-shift complementary code pairs, called SOQT-SCC, pairs **characterized in that** a maximum of four code sets each consisting of two two-shift complementary, called T-SC, code elements of length $L = 2^n$, $n >1$ can be used for spreading a maximum of four data symbol streams on the same resources.

2. A method according to claim 1, using a single or multiple of SOQT-SCC pairs over any number of resources, with or without using time division multiple access schemes, frequency hopping patterns or any other resource allocation schemes that are found relevant in connection with SOQT-SCC.

3. A method according to claim 1 or 2, wherein the T-SC code elements of length $L$ have an aperiodic auto-correlation, called AAC, function which takes on zero values for every second shift, starting with the shift $\tau = 2$.

4. A method according to claim 1,2 or 3, wherein the SOQT-SCC pairs are **characterized in that** every second chip of one T-SC code element is negated compared to the respective chip of the other T-SC code element within the SOQT-SCC pair.

5. A method according to any of the preceding claims **characterized in that** the sum of AAC functions of T-SC code elements within any SOQT-SCC pair is ideal delta function, with the peak magnitude of 2L and side-lobes level of zero, and sum of aperiodic cross-correlation functions of the respective T-SC code elements of any two SOQT-SCC pairs is zero for every fourth shift, including zero shift.

6. A method according to any of the preceding claims, wherein the T-SC code element of length 2L can be generated by interleaving two T-SC code elements forming the SOQT-SCC pair of length $L$.

7. A method according to claim 6, with the interleaving **characterized in that** the one T-SC code element of the SOQT-SCC pair represents even and the other one represents odd coordinates of the T-SC code element to be generated.

8. A method according to any of the preceding claims, wherein the code sets can be generated by simple reordering, reversing and negating of the code elements of another set.

9. A method according to any of the preceding claims, wherein each code set can be generated by componentwise multiplying of another code set with a vector of length $L$ specified in that its even coordinates are negated compared to odd coordinates.

10. A communications system for transmitting and/or receiving signals based on any spreading technique employing SOQT-SCC pairs **characterized in that** a maximum of four code sets each consisting of two T-SC code elements of length $L=2^n$, $n > 1$ can be used for spreading a maximum of four data symbol streams on the same resources.

# FIG 1

frequency

T-SCC pair #1 of user #1
T-SCC pair #2 of user #2
T-SCC pair #2 of user #3
T-SCC pair #2 of user #4
T-SCC pair #2 of user #5
T-SCC pair #2 of user #6
T-SCC pair #2 of user #7
T-SCC pair #3 of user #8
T-SCC pair #3 of user #9
T-SCC pair #3 of user #10
T-SCC pair #4 of user #11
T-SCC pair #4 of user #12

Code

Example of resource allocation for multi-carrier CDMA system with SOQT-SCCP

FIG 2

frequency

Time

| | T-SCC pairs of users #1 - #4 |
| | T-SCC pairs of users #5 - #8 |
| | T-SCC pairs of users #9 - #12 |
| | T-SCC pairs of users #13 - #16 |
| | T-SCC pairs of users #17 - #20 |
| | T-SCC pairs of users #(2N-11) - #(2N-8) |
| | T-SCC pairs of users #(2N-7) - #(2N-4) |
| | T-SCC pairs of users #(2N-3) - #2N |

Multi-carrier CDMA system with SOQT-SCCP and orthogonal frequency hopping

# FIG 3

—— analytical BPSK     □ SOQT-SCCP 4 user

×   SOQT-SCCP 1 user     ○ CCC 1 user

BER performance comparison of multi-carrier CDMA
system with offset stacked spreading using SOQT-SCCP and CC codes (CCC)

**European Patent Office**

**EUROPEAN SEARCH REPORT**

Application Number

EP 06 01 8599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 2005/039081 A (SIEMENS AG [DE]; PIEKOV MARTIN [SK]; SVAC PAVOL [SK]) 28 April 2005 (2005-04-28) * the whole document * ----- | 1-10 | INV. H04J11/00 |
| D,X | SVAC P: "Variable Two-Shift Complete Complementary Code" COMPUTER AS A TOOL, 2005. EUROCON 2005.THE INTERNATIONAL CONFERENCE ON BELGRADE, SERBIA AND MONTENEGRO 21-24 NOV. 2005, PISCATAWAY, NJ, USA,IEEE, 21 November 2005 (2005-11-21), pages 482-485, XP010916132 ISBN: 1-4244-0049-X * the whole document * ----- | 1-10 | |
| A | HSIAO-HWA CHEN ET AL: "A Multicarrier CDMA Architecture Based on Orthogonal Complementary Codes for New Generations of Wideband Wireless Communications" IEEE COMMUNICATIONS MAGAZINE, IEEE SERVICE CENTER, PISCATAWAY, US, vol. 39, no. 10, October 2001 (2001-10), pages 126-135, XP011091826 ISSN: 0163-6804 * Introduction, Complete complementary codes * * abstract * ----- | 1-10 | TECHNICAL FIELDS SEARCHED (IPC) H04J |

The present search report has been drawn up for all claims

| Place of search | Date of completion of the search | Examiner |
|---|---|---|
| Munich | 12 February 2007 | Galli, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 01 8599

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2007

| Patent document cited in search report | Publication date | Patent family member(s) | | Publication date |
|---|---|---|---|---|
| WO 2005039081 A | 28-04-2005 | CN | 1894877 A | 10-01-2007 |
| | | KR | 20060107781 A | 16-10-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005039081 A1

### Non-patent literature cited in the description

- **M.J.E. GOLAY.** Multislit spectrometry. *Journal of the Optical Society of America,* 1949, vol. 39, 437-444
- **M.J.E. GOLAY.** Static multislit spectrometry and its application to the panoramatic display of infrared spectra. *Journal of the Optical Society of America,* 1951, vol. 41, 468-472
- **M.J.E. GOLAY.** Complementary series. *IRE Transactions on Information Theory,* April 1961, vol. IT-7, 82-87
- **G. WELTI.** Quaternary codes for pulsed radar. *IEEE Transactions on Information Theory,* June 1960, vol. IT-6, 400-408
- **R. TURYN.** Ambiguity Functions of complementary sequences. *IEEE Transactions on Information Theory,* January 1963, vol. IT-9, 46-47
- **Y. TAKI ; H. MIYAKAWA ; M. HATORI ; S. NAMBA.** Even-shift orthogonal sequences. *IEEE Transactions on Information Theory,* March 1969, vol. IT-15, 295-300
- **R. SIWASWAMY.** Multiphase complementary codes. *IEEE Transactions on Information Theory,* September 1978, vol. IT-24, 546-552
- **R. L. FRANK.** Polyphase complementary codes. *IEEE Transactions on Information Theory,* November 1980, vol. IT-26, 641-647
- **C.-C. TSENG ; C.L. LIU.** Complementary sets of sequences. *IEEE Transactions on Information Theory,* September 1972, vol. IT-18, 644-652
- **N. SUEHIRO ; M. HATORI.** N-shift cross-orthogonal sequences. *IEEE Transactions on Information Theory,* January 1988, vol. IT-34, 143-146
- **S.M. TSENG ; M.R. BELL.** Asynchronous multicarrier DS-CDMA using mutually orthogonal complementary sets of sequences. *IEEE Transactions on Comm.,* January 2000, vol. 48, 53-59
- **H.H. CHEN ; I.F. YEH ; N. SUEHIRO.** A multicarrier CDMA architecture based on orthogonal complementary codes for new generations of wideband wireless communications. *IEEE Commun. Mag,* October 2001, vol. 39, 126-135
- **XIAOJING HUANG ; YUNXIN LI.** Scalable complete complementary sets of sequences. *GLOBECOM 2002,* November 2002, vol. 2, 1056-1060
- **P. SVAC.** Variable Two-Shift Complete Complementary Code. *EUROCON 2005,* November 2005, 482-485